# EUROPÄISCHE PATENTSCHRIFT

(11) **EP 2 945 975 B1**
(45) Veröffentlichungstag und Bekanntmachung des Hinweises auf die Patenterteilung: **19.10.2016**
(21) Anmeldenummer: 14700244.8
(22) Anmeldetag: 08.01.2014
(51) Int. Cl.: C08G 65/00

(54) **POLYOLE, DEREN HERSTELLUNG UND VERWENDUNG**
POLYOLS, THEIR PREPARATION AND USE
POLYOLS, LEUR FABRICATION ET LEUR UTILISATION

(30) Priorität: 15.01.2013 EP 13151261
(43) Veröffentlichungstag der Anmeldung: 25.11.2015
(73) Patentinhaber: BASF SE, 67056 Ludwigshafen am Rhein (DE)
(72) Erfinder: KOCH, Sebastian, 49448 Lemförde (DE); KÖNIG, Christian, 68165 Mannheim (DE)
(74) Vertreter: BASF IP Association
(86) Internationale Anmeldenummer: PCT/EP2014/050195
(87) Internationale Veröffentlichungsnummer: WO 2014/111291

(56) Entgegenhaltungen:
- EP-A1- 1 923 417
- EP-A1- 2 039 711
- EP-A1- 2 365 019
- EP-A2- 2 177 555
- WO-A1-2012/084760
- DE-A1- 10 237 914

## Beschreibung

Die vorliegende Erfindung betrifft Polyole, deren Herstellung und Verwendung. Polyole basierend auf Zucker-Glycerin-Mischungen als Starter werden in Polyurethan-Schäumen standardmäßig eingesetzt, um die Netzwerkdichte zu erhöhen und somit die mechanischen Eigenschaften zu verbessern. Normalerweise werden Mischungen aus Sorbitol und Glycerin oder Mischungen aus Saccharose und Glycerin verwendet. Die Startergemische sind notwendig, um den kristallinen Zucker zur Reaktion zu bringen, die Zersetzung der Starterverbindungen zu verhindern und die gewünschte mittlere Starterfunktionalität des Polyols einzustellen. Dem Fachmann ist bekannt, dass mit steigender Starterfunktionalität der Polyole die Viskosität stark zunimmt. Weiterhin ist bekannt, dass Sorbitol gestartete Polyole bei vergleichbarerer Starterffunktionalität und OH-Zahl niedrigere Viskosität als Saccharose gestartete Polyole besitzen. Sorbitol gestartete Polyole können aber aufgrund ihrer Struktur keine höheren Starterfunktionalitäten als 6 erreichen. Mit Saccharose als Starter können deutlich höhere Starterfunktionalitäten bis zu maximal 8 erreicht werden. Solche Polyole haben aber eine so hohe Viskosität, dass sie nicht mehr technisch verarbeitet werden können. Diese höhere Starterfunktionalität ist jedoch besonders erstrebenswert, um verbesserte Druckfestigkeiten zu erzielen. Mit Polyolblends, also rein physikalischen Mischungen aus Sorbitol- und Saccharose-gestarteten Polyolen können zwar höhere Starterfunktionalitäten als von reinen Sorbitol-gestarteten Polyolen erreicht werden, doch die Mischviskosität solcher Blends ist annähernd das stöchiometrische Mittel der Ausgangsviskositäten und somit immer noch zu hoch, um in bestehenden Formulierungen verwendet werden zu können.

Im Rahmen der vorliegenden Offenbarung bezeichnet der Begriff der Starterfunktionalität die durchschnittliche Anzahl von funktionellen Gruppen pro funktionellem Startermolekül, welches zu Beginn der Reaktion vorgelegt wurde.

DE102008051882A1 beschreibt die Verwendung von Sorbitol/Saccharose Starter-Mischungen für die Synthese von Polyether-ester Polyolen. Dabei werden 70 gew.-%ige Lösungen von Sorbit und Saccharose nach Abdestillieren des Wasser mit Sojaöl unter Imidazol Katalyse umgesetzt. Diese Polyetherester-Polyole werden dann einer weiteren Starter Mischung aus Sorbitol/Saccharose hinzugefügt. Dies verhindert ein Zersetzen der Starter-Mischung und ermöglicht eine bessere Aufnahme von Propylenoxid im Reaktionsgemisch.
Diese Offenbarung scheint zwar die Verwendung einer erhöhten Menge Saccharose in der Starter-Mischung zu ermöglichen, liefert aber keine Lösungsansätze für hochfunktionelle, niedrigviskose Polyole mit hohen Hydroxwerten.

EP 1923417A1 beschreibt die Synthese und Verwendung von Polyetherester-Polyolen auf Basis von Sorbitol/Glycerin- und/oder Saccharose/Glycerin-Mischungen mit Triglyceriden. Dieses Dokument offenbart Polyole mit einer OH-Zahl kleiner 400 mg/KOH und einer Starterfunktionalität < 4.5. Diese Polyole zeigen eine höhere Kapazität für hydrophobe Substanzen wie Cyclopentan, ermöglichen jedoch nicht die Synthese von niederviskosen, hochfunktionellen Polyolen.

EP2365019A1 beschreibt ein Koppelverfahren zur Herstellung von hochfunktionellen, bei Reaktionsbedingungen festen bzw. hochviskosen Starterverbindungen und monofunktionellen, bei Reaktionsbedingungen flüssigen Starterverbindungen.
Das offenbarte Verfahren ermöglicht zwar die Synthese hochfunktioneller Polyole, deren Viskosität nicht beschrieben wird. Durch das Abdestillieren der propoxylierten monofunktionellen Starterverbindung ist dieses Verfahren jedoch mit dem Verlust von eingesetztem Propylenoxid verbunden, zeit- und energieaufwendig und somit aus ökonomischen Gesichtspunkten nicht anwendbar.

EP 2 177 555 A2 offenbart ein Verfahren zur Herstellung von Polyetheresterpolyolen, wobei unter anderem Mischungen aus Saccharose, Sorbit, Fettsäureestern und Alkylenoxiden eingesetzt werden. In den Beispielen wird kein zusätzlicher Costarter eingesetzt. Es werden relativ niedrige Funktionalitäten erreicht, wodurch sich das Problem hoher Viskositäten im Produkt nicht in dem Maße stellt wie bei höherfunktionellen Polyolen.

Die Aufgabe der vorliegenden Erfindung ist es daher, auf ökonomisch und ökologisch möglichst effiziente Weise hochfunktionelle Zuckerpolyole mit hohen OH-Zahlen und niedrigen Viskositäten herzustellen.

Diese Aufgabe konnte überraschenderweise gelöst werden durch den Einsatz von propoxylierten Starter-Mischungen aus Saccharose, Sorbitol, Glycerin und Biodiesel. Bei Biodiesel handelt es sich dabei um ein Gemisch aus Fettsäuremethylester, welches unter anderem aus Palmölmethylester, Rapsölmethylester, Sonnenblumenmethylester, Sajaölmethylester sowie Tierfettmethylester bestehen kann.
Denn überraschenderweise hat sich gezeigt, dass propoxylierte Starter-Mischungen aus Saccharose, Sorbitol, Glycerin und Biodiesel zu Polyolen mit signifikant niedrigeren Viskositäten als die entsprechenden Polyolblends aus einem entsprechendem Sorbitol-gestarteten Polyol und einem entsprechenden Saccharose-gestarteten Polyol führen. Eine signifikante Erniedrigung der Viskosität lässt sich bereits mit geringen Sorbitolanteilen erreichen. Diese Erfindung ermöglicht es somit erstmals, hochfunktionelle Polyole mit hohen Hydroxywerten bei gleichzeitig niedrigen Viskositäten zu synthetisieren.

Der Gegenstand der vorliegenden Erfindung ist also ein Polyol, erhältlich durch Umsetzung einer Mischung aus
a1) 0,5-43% Saccharose,
a2) 0,5-36% Sorbitol,
a3) 0,5-12% Glycerin,
a4) 0,5-30% einer oder mehrerer Fettsäuren und/oder Fettsäureestern, und
a5) 21-82% eines oder mehrerer Alkylenoxide mit 2 bis 4 C-Atomen
in Gegenwart eines Katalysators, dadurch gekennzeichnet, dass das Alkylenoxid der Komponente a5) Propylenoxid enthält.

Weitere Gegenstände der vorliegenden Erfindung sind auch ein Verfahren zur Herstellung eines Polyols, wie in den Ansprüchen beschrieben, sowie die Verwendung eines erfindungsgemäßen Polyols bzw. eines nach dem erfindungsgemäßen Verfahren herstellbaren Polyols zur Herstellung von Polyurethanen.

In einer bevorzugten Ausführungsform des erfindungsgemäßen Polyols bzw. des erfindungsgemäßen Verfahrens sind 5 bis 18 Gew.% der Komponente a4) enthalten.

In einer weiteren bevorzugten Ausführungsform des erfindungsgemäßen Polyols bzw. des erfindungsgemäßen Verfahrens zur Herstellung eines Polyols enthält die Komponente a4) Fettsäureestermonoester und/oder Fettsäuremonoesterderivate, bevorzugt Ölsäure, Ölsäuremethylester und/ oder ein Ölsäurederivat.

In einer weiteren bevorzugten Ausführungsform des erfindungsgemäßen Polyols bzw. des erfindungsgemäßen Verfahrens zur Herstellung eines Polyols enthält die Komponente a4) eine Verbindung ausgewählt aus der Gruppe bestehend aus Fettsäuremethylester und Ölsäuremethylester. Besonders bevorzugt enthält die Komponente a4) eine Verbindung ausgewählt aus der Gruppe bestehend aus Fettsäuremethylester und Ölsäuremethylester, jedoch keine Fettsäure.

Erfindungsgemäß enthält das Alkylenoxid der Komponente a5) Propylenoxid. Besonders bevorzugt besteht das Alkylenoxid der Komponente a5) aus Propylenoxid.

In einer weiteren bevorzugten Ausführungsform des erfindungsgemäßen Polyols bzw. des erfindungsgemäßen Verfahrens zur Herstellung eines Polyols liegt die OH-Zahl zwischen 400 bis 700 mg KOH/g, besonders bevorzugt 450 bis 650 mg KOH/ g, ganz besonders bevorzugt 480 bis 550 mg KOH/ g.
In einer weiteren bevorzugten Ausführungsform des erfindungsgemäßen Polyols bzw. des erfindungsgemäßen Verfahrens zur Herstellung eines Polyols liegt die Starterfunktionalität zwischen 2,5 bis 8, bevorzugt 4 bis 6, besonders bevorzugt 4.2 bis 5.5.

In einer weiteren bevorzugten Ausführungsform des erfindungsgemäßen Polyols bzw. des erfindungsgemäßen Verfahrens zur Herstellung eines Polyols ist der Katalysator ausgewählt ist aus der Gruppe der aminischen Katalysatoren. Besonders bevorzugt ist Imidazol.

Die Figuren beschreiben die Viskosität von Polyolen, u. a. in Abhängigkeit von dem Anteil an Sorbitol im Polyol in Gewichtsprozent.

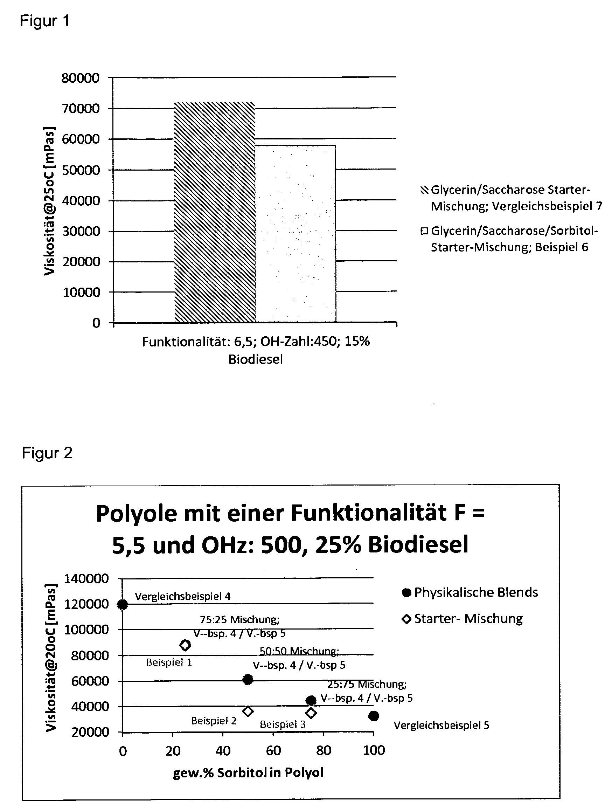

Figur 1: Vergleichsbeispiel 7 ist ein nach dem Stand der Technik hergestelltes hochfunktionelles Zuckerpolyol (Funktionalität 6,5) und einer hohen OH-Zahl von 450. Die Viskosität dieses Polyols (72170 mPas bei 20°C) ist sehr hoch und erlaubt es nicht, das Polyol in Polyurethanformulierungen einzusetzen. Beispiel 6 zeigt bei gleicher Funktionalität und OH-Zahl erfindungsgemäß eine signifikant niedrigere Viskosität von 58090 mPas bei 20°C (20% erniedrigt). Dies ist wohl auf die veränderte Startermischung zurückzuführen. Die Starter-Mischung in Beispiel 6 besteht aus Glycerin/Saccharose/Sorbitol, im Gegensatz zu Vergleichsbeispiel 7, dessen Starter-Mischung nur aus Glycerin/Saccharose besteht. Verwendet man aber nur physikalische Mischungen aus Polyolen mit Glycerin/Saccharose- oder Glycerin/Sorbitol-Startermischungen, so lässt sich der Effekt der erniedrigten Viskosität bei gleicher OH-Zahl und Funktionalität nicht erreichen (siehe Figur 2).
Figur 2: Vergleicht man Polyole, die dieselbe Zusammensetzung bezüglich Glycerin-/Saccharose-/Sorbitol-/Propylenoxid-/Biodiesel-Gehalt besitzen, so ist überraschend, dass diese Polyole je nach Herstellungsart unterschiedliche Viskositäten besitzen. Verwendet man Starter-Mischungen von Glycerin/Saccharose/Sorbitol, so sind die Viskositäten in diesem Beispiel bis zu 45% niedriger als bei Polyolen, bei denen ein unabhängig voneinander hergestelltes Glycerin/Saccharose -gestartetes und ein Glycerin/Sorbitol-gestartetes Polyol physikalisch miteinander gemischt worden sind. Und dies, obwohl diese Mischungen denselben Glycerin-/Saccharose-/Sorbitol-/Propylenoxid-/Biodiesel-Gehalt besitzen und somit dieselbe Funktionalität und OH-Zahl.

### Beispiele

Im Folgenden werden einige Beispiele zur Veranschaulichung der Erfindung angeführt. Dabei dienen die Beispiele nur illustrativen Zwecken und sollen keinesfalls den Umfang der Ansprüche einschränken.

Die Viskosität wurde gemäß DIN 53018 bei 20 °C bestimmt. Die OH-Zahl wurde bestimmt nach DIN 53240.

Die physikalischen Mischungen wurden hergestellt, indem die jeweils angegebenen Polyole bei Raumtemperatur so lange gerührt wurden, bis ein homogenes Gemisch erhalten wurde.

### Beispiel 1

### Herstellung eines Polyetheresters mit Glycerin, Saccharose, Sorbitol und Biodiesel

14,4 g Glycerin, 0,1 g Imidazol, 48,7 g Saccharose, 16,1 g Sorbitol sowie 60,0 g Biodiesel wurden bei 25 °C in einen Reaktor vorgelegt. Anschließend wurde dieser mit Stickstoff inertisiert. Der Kessel wurde auf 130 °C erhitzt und 100,7 g Propylenoxid zu dosiert. Nach einer Abreaktionszeit von 5 h wurde für 40 Minuten unter vollem Vakuum bei 100 °C evakuiert und anschließend auf 25 °C abgekühlt. Es wurden 220,4 g Produkt erhalten.

Der erhaltene Polyetherester besaß folgende Kennwerte:
OH-Zahl: 497,0 mg KOH/g
Viskosität (20 °C):87660 mPas
Säurezahl: kleiner 0,01 mg KOH/g
Wassergehalt: 0,014%
Starterfunktionalität: 5,5

### Beispiel 2

### Herstellung eines Polyetheresters mit Glycerin, Saccharose, Sorbitol und Biodiesel

11,4 g Glycerin, 0,1 g Imidazol, 29,8 g Saccharose, Sorbitol 31,6 g sowie 60,4 g Biodiesel wurden bei 25 °C in einen Reaktor vorgelegt. Anschließend wurde dieser mit Stickstoff inertisiert. Der Kessel wurde auf 130 °C erhitzt und 160,6 g Propylenoxid zu dosiert. Nach einer Abreaktionszeit von 6 h wurde für 40 Minuten unter vollem Vakuum bei 100 °C evakuiert und anschließend auf 25 °C abgekühlt. Es wurden 215,6 g Produkt erhalten.

Der erhaltene Polyetherester besaß folgende Kennwerte:
OH-Zahl: 497,6 mg KOH/g
Viskosität (20 °C): 36100 mPas
Säurezahl: kleiner 0,01 mg KOH/g
Wassergehalt: 0,012%
Starterfunktionalität 5,5

### Beispiel 3

### Herstellung eines Polyetheresters mit Glycerin, Saccharose, Sorbitol und Biodiesel

7,8 g Glycerin, 0,1 g Imidazol, 11,9 g Saccharose, 48,7 Sorbitol sowie 60,0 g Biodiesel wurden bei 25 °C in einen Reaktor vorgelegt. Anschließend wurde dieser mit Stickstoff inertisiert. Der Kessel wurde auf 130 °C erhitzt und 111,4 g Propylenoxid zu dosiert. Nach einer Abreaktionszeit von 6 h wurde für 40 Minuten unter vollem Vakuum bei 100 °C evakuiert und anschließend auf 25 °C abgekühlt. Es wurden 213,9 g Produkt erhalten.

Der erhaltene Polyetherester besaß folgende Kennwerte:
OH-Zahl: 485,7 mg KOH/g
Viskosität (20 °C): 34310mPas
Säurezahl: 0,012 mg KOH/g
Wassergehalt: 0,012%
Starterfunktionalität 5,5

### Vergleichs-Beispiel 4

### Herstellung eines Polyetheresters mit Glycerin, Saccharose und Biodiesel

17,7 g Glycerin, 0,1 g Imidazol, 66,8 Saccharose sowie 60,0 g Biodiesel wurden bei 25 °C in einen Reaktor vorgelegt. Anschließend wurde dieser mit Stickstoff inertisiert. Der Kessel wurde auf 130 °C erhitzt und 93,9 g Propylenoxid zu dosiert. Nach einer Abreaktionszeit von 4 h wurde für 40 Minuten unter vollem Vakuum bei 100 °C evakuiert und anschließend auf 25 °C abgekühlt. Es wurden 213,9 g Produkt erhalten.

Der erhaltene Polyetherester besaß folgende Kennwerte:
OH-Zahl: 492,6 mg KOH/g
Viskosität (20 °C): 119600 mPas
Säurezahl: kleiner 0,01 mg KOH/g
Starterfunktionalität 5,5

### Vergleichs-Beispiel 5

### Herstellung eines Polyetheresters mit Glycerin, Sorbitol und Biodiesel

5,7 g Glycerin, 0,1 g Imidazol, 59,3 Sorbitol sowie 60,0 g Biodiesel wurden bei 25 °C in einen Reaktor vorgelegt. Anschließend wurde dieser mit Stickstoff inertisiert. Der Kessel wurde auf 130 °C erhitzt und 114,9 g Propylenoxid zu dosiert. Nach einer Abreaktionszeit von 4 h wurde für 40 Minuten unter vollem Vakuum bei 100 °C evakuiert und anschließend auf 25 °C abgekühlt. Es wurden 213,6 g Produkt erhalten.

Der erhaltene Polyetherester besaß folgende Kennwerte:
OH-Zahl: 515,3 mg KOH/g
Viskosität (20 °C): 31870 mPas
Säurezahl: kleiner 0,01 mg KOH/g
Starterfunktionalität 5,5

### Beispiel 6

### Herstellung eines Polyetheresters mit Glycerin, Saccharose, Sorbitol und Biodiesel

6,9 g Glycerin, 0,1 g Imidazol, 65,3 g Saccharose, 5,2 Sorbitol sowie 36,0 g Biodiesel wurden bei 25 °C in einen Reaktor vorgelegt. Anschließend wurde dieser mit Stickstoff inertisiert. Der Kessel wurde auf 130 °C erhitzt und 126,4 g Propylenoxid zu dosiert. Nach einer Abreaktionszeit von 6 h wurde für 40 Minuten unter vollem Vakuum bei 100 °C evakuiert und anschließend auf 25 °C abgekühlt. Es wurden 208,5 g Produkt erhalten.

Der erhaltene Polyetherester besaß folgende Kennwerte:
OH-Zahl: 453,8 mg KOH/g
Viskosität (25 °C): 58090 mPas
Säurezahl: kleiner 0,01 mg KOH/g
Starterfunktionalität 6,5

### Vergleichs-Beispiel 7

### Herstellung eines Polyetheresters mit Glycerin, Saccharose und Biodiesel

8,0 g Glycerin, 0,1 g Imidazol, 71,2 Saccharose sowie 36,0 g Biodiesel wurden bei 25 °C in einen Reaktor vorgelegt. Anschließend wurde dieser mit Stickstoff inertisiert. Der Kessel wurde auf 130 °C erhitzt und 124,7 g Propylenoxid zu dosiert. Nach einer Abreaktionszeit von 3 h wurde für 40 Minuten unter vollem Vakuum bei 100 °C evakuiert und anschließend auf 25 °C abgekühlt. Es wurden 214,5 g Produkt erhalten.

Der erhaltene Polyetherester besaß folgende Kennwerte:
OH-Zahl: 450,8 mg KOH/g
Viskosität (25 °C): 72170 mPas
Säurezahl: kleiner 0,01 mg KOH/g
Starterfunktionalität 6,5

Anhand der Beispiele (1 bis 3 und 6) und Vergleichsbeispiele (4, 5 und 7) und anhand der Figuren 1 und 2 erkennt man, dass die Viskosität der Polyole, die aus der direkten Alkoxylierung einer Glycerin-Sorbitol-Sucrose-Mischung erhalten werden, niedriger ist als die Viskosität eines Polyols mit einer fast identischen OH-Zahl und Funktionalität, welches jedoch einen physikalischen Blend darstellt aus a) einem aus Glycerin und Sorbitöl hergestellten Polyol mit b) einem aus Glycerin und einer Glycerin-Sorbitol-Mischung hergestellten Polyol.

| Beispiele | Glycerin | Sorbitol | Zucker | Biodiesel | OH-Zahl | F | Viskosität |
|---|---|---|---|---|---|---|---|
| 1 | 5.45 | 6.1 | 18.4 | 22.7 | 497 | 5.5 | 87660 |
| 2 | 4.41 | 12.23 | 11.54 | 23.4 | 497.6 | 5.5 | 36100 |
| 3 | 3.08 | 19.21 | 4.7 | 23.7 | 485.7 | 5.5 | 34310 |
| 4 | 6.57 | 0 | 24.8 | 22.3 | 492 | 5.5 | 119600 |
| 5 | 2.28 | 23.71 | 0 | 24 | 515 | 5.5 | 31870 |
| 6 | 2.89 | 2.18 | 27.38 | 15 | 454 | 6.5 | 58090 |
| 7 | 3.33 | 0 | 29.6 | 15 | 451 | 6.5 | 72170 |

| Physikal. Mischung | Verhältnis | | OH-Zahl | F | Viskosität |
|---|---|---|---|---|---|
| Bsp. 4 | 100 | 0 | 485.7 | 5.5 | 119600 |
| Bsp. 4 + 5 | 75 | 25 | 497.8 | 5.5 | |
| Bsp. 4 + 5 | 50 | 50 | 503.5 | 5.5 | |
| Bsp. 4 + 5 | 25 | 75 | 509.0 | 5.5 | |
| Bsp. 5 | 0 | 100 | 515.0 | 5.5 | 31870 |

## Patentansprüche

1. Polyol, erhältlich durch Umsetzung einer Mischung aus
a1) 0,5-43 Gew.% Saccharose,
a2) 0,5-36 Gew.% Sorbitol,
a3) 0,5-12 Gew.% Glycerin,
a4) 0,5-30 Gew.% einer oder mehrerer Fettsäuren und/oder Fettsäureestern, und
a5) 21-82 Gew.% eines oder mehrerer Alkylenoxide mit 2 bis 4 C-Atomen,
in Gegenwart eines Katalysators,
**dadurch gekennzeichnet, dass** das Alkylenoxid der Komponente a5) Propylenoxid enthält.

2. Polyol nach Anspruch 1, **dadurch gekennzeichnet, dass** die Komponente a4) Fettsäureestermonoester und/oder Fettsäuremonoesterderivate, im speziellen Ölsäure, Ölsäuremethylester und/ oder ein Ölsäurederivat enthält.

3. Polyol nach einem der Ansprüche 1 bis 2, **dadurch gekennzeichnet, dass** das Alkylenoxid der Komponente a5) aus Propylenoxid besteht.

4. Polyol nach einem der Ansprüche 1 bis 3, **dadurch gekennzeichnet, dass** die OH-Zahl zwischen 400 bis 700 mg KOH/g, bevorzugt 450 bis 650 mg KOH/ g, besonders bevorzugt 480 bis 550 mg KOH/ g liegt.

5. Polyol nach einem der Ansprüche 1 bis 4, **dadurch gekennzeichnet, dass** die Starterfunktionalität zwischen 2,5 bis 8, bevorzugt 4 bis 6, besonders bevorzugt 4.2 bis 5.5 liegt.

6. Polyol nach einem der Ansprüche 1 bis 5, wobei der Katalysator ausgewählt ist aus der Gruppe der aminischen Katalysatoren, bevorzugt Imidazol.

7. Verfahren zur Herstellung eines Polyols, wobei eine Mischung aus
a1) 0,5-43 Gew. % Saccharose,
a2) 0,5-36 Gew.% Sorbitol,
a3) 0,5-12 Gew.% Glycerin,
a4) 0,5-30 Gew.% einer oder mehrerer Fettsäuren und/oder Fettsäureestern, und
a5) 21-82 Gew.% eines oder mehrerer Alkylenoxide mit 2 bis 4 C-Atomen,
in Gegenwart eines Katalysators umgesetzt wird, wobei das Alkylenoxid der Komponente a5) Propylenoxid enthält.

8. Verfahren zur Herstellung eines Polyols gemäß Anspruch 7, wobei die Komponente a4) Fettsäureestermonoester und/oder Fettsäuremonoesterderivate, im speziellen Ölsäure, Ölsäuremethylester oder ein Ölsäurederivat enthält.

9. Verfahren zur Herstellung eines Polyols gemäß einem der Ansprüche 7 bis 8, wobei das Alkylenoxid der Komponente a5) aus Propylenoxid besteht.

10. Verfahren zur Herstellung eines Polyols gemäß einem der Ansprüche 7 bis 9, wobei die OH-Zahl des Polyol-Produkts zwischen 400 bis 700 mg KOH/g, bevorzugt 450 bis 650 mg KOH/ g, besonders bevorzugt 480 bis 550 mg KOH/ g liegt.

11. Verfahren zur Herstellung eines Polyols gemäß einem der Ansprüche 7 bis 10, wobei die Starterfunktionalität zwischen 2,5 bis 8, bevorzugt 4 bis 6, besonders bevorzugt 4.2 bis 5.5 liegt.

12. Verfahren zur Herstellung eines Polyols gemäß einem der Ansprüche 7 bis 11, wobei der Katalysator ausgewählt ist aus der Gruppe der aminischen Katalysatoren, bevorzugt Imidazol.

13. Verfahren zur Herstellung eines Polyols gemäß einem der Ansprüche 7 bis 12, wobei die Temperatur während der Umsetzung im Bereich von 80 bis 140 °C liegt und/ oder wobei die Umsetzung 30 Minuten bis 10 Stunden dauert.

14. Verwendung eines Polyols gemäß einem der Ansprüche 1 bis 6 oder eines gemäß dem Verfahren eines der Ansprüche 7 bis 13 herstellbaren Polyols zur Herstellung von Polyurethanen.

## Claims

1. A polyol, obtainable by reacting a mixture of
a1) 0.5-43% by weight of sucrose,
a2) 0.5-36% by weight of sorbitol,
a3) 0.5-12% by weight of glycerol,
a4) 0.5-30% by weight of one or more fatty acids and/or fatty acid esters, and
a5) 21-82% by weight of one or more alkylene oxides having 2 to 4 carbon atoms,
in the presence of a catalyst,
wherein the alkylene oxide of the component a5) comprises propylene oxide.

2. The polyol according to claim 1, wherein the component a4) comprises
fatty acid ester monoesters and/or fatty acid monoester derivatives, especially oleic acid, oleic acid methyl ester and/or an oleic acid derivative.

3. The polyol according to any of claims 1 to 2, wherein the alkylene oxide of the component a5) consists of propylene oxide.

4. The polyol according to any of claims 1 to 3, wherein the OH number is from 400 to 700 mg KOH/g, preferably from 450 to 650 mg KOH/g, particularly preferably from 480 to 550 mg KOH/g.

5. The polyol according to any of claims 1 to 4, wherein the starter functionality is from 2.5 to 8, preferably from 4 to 6, particularly preferably from 4.2 to 5.5.

6. The polyol according to any of claims 1 to 5, wherein the catalyst is selected from the group of the aminic catalysts, preferably imidazole.

7. A method for preparing a polyol, wherein a mixture of
a1) 0.5-43% by weight of sucrose,
a2) 0.5-36% by weight of sorbitol,
a3) 0.5-12% by weight of glycerol,
a4) 0.5-30% by weight of one or more fatty acids and/or fatty acid esters, and
a5) 21-82% by weight of one or more alkylene oxides having 2 to 4 carbon atoms,
is reacted in the presence of a catalyst, wherein the alkylene oxide of the component a5) comprises propylene oxide

8. The method for preparing a polyol according to claim 7, wherein the component a4) comprises fatty acid ester monoesters and/or fatty acid monoester derivatives, especially oleic acid, oleic acid methyl ester or an oleic acid derivative.

9. The method for preparing a polyol according to any of claims 7 to 8, wherein the alkylene oxide of the component a5) consists of propylene oxide.

10. The method for preparing a polyol according to any of claims 7 to 9, wherein the OH number of the polyol product is from 400 to 700 mg KOH/g, preferably from 450 to 650 mg KOH/g, particularly preferably from 480 to 550 mg KOH/g.

11. The method for preparing a polyol according to any of claims 7 to 10, wherein the starter functionality is from 2.5 to 8, preferably from 4 to 6, particularly preferably from 4.2 to 5.5.

12. The method for preparing a polyol according to any of claims 7 to 11, wherein the catalyst is selected from the group of the aminic catalysts, preferably imidazole.

13. The method for preparing a polyol according to any of claims 7 to 12, wherein the temperature during the reaction is in the range from 80 to 140°C and/or wherein the reaction takes 30 minutes to 10 hours.

14. The use of a polyol according to any of claims 1 to 6, or of a polyol preparable according to the method of any of claims 7 to 13, for preparing polyurethanes.

## Revendications

1. Polyol, pouvant être obtenu par mise en réaction d'un mélange de
a1) 0,5 à 43 % en poids de saccharose,
a2) 0,5 à 36 % en poids de sorbitol,
a3) 0,5 à 12 % en poids de glycérine,
a4) 0,5 à 30 % en poids d'un ou de plusieurs acides gras et/ou esters d'acides gras, et
a5) 21 à 82 % en poids d'un ou de plusieurs oxydes d'alkylène de 2 à 4 atomes C,
en présence d'un catalyseur,
**caractérisé en ce que** l'oxyde d'alkylène du composant a5) contient de l'oxyde de propylène.

2. Polyol selon la revendication 1, **caractérisé en ce que** le composant a4) contient des monoesters d'acides gras et/ou des dérivés de monoesters d'acides gras, en particulier l'acide oléique, l'ester méthylique de l'acide oléique et/ou un dérivé de l'acide oléique.

3. Polyol selon l'une quelconque des revendications 1 à 2, **caractérisé en ce que** l'oxyde d'alkylène du composant a5) est constitué d'oxyde de propylène.

4. Polyol selon l'une quelconque des revendications 1 à 3, **caractérisé en ce que** l'indice OH est compris entre 400 et 700 mg KOH/g, de préférence entre 450 et 650 mg KOH/g, de manière particulièrement préférée entre 480 et 550 mg KOH/g.

5. Polyol selon l'une quelconque des revendications 1 à 4, **caractérisé en ce que** la fonctionnalité du démarreur est comprise entre 2,5 et 8, de préférence entre 4 et 6, de manière particulièrement préférée entre 4,2 et 5,5.

6. Polyol selon l'une quelconque des revendications 1 à 5, **caractérisé en ce que** le catalyseur est choisi dans le groupe des catalyseurs aminés, de préférence l'imidazole.

7. Procédé de fabrication d'un polyol, selon lequel un mélange de
a1) 0,5 à 43 % en poids de saccharose,
a2) 0,5 à 36 % en poids de sorbitol,
a3) 0,5 à 12 % en poids de glycérine,
a4) 0,5 à 30 % en poids d'un ou de plusieurs acides gras et/ou esters d'acides gras, et
a5) 21 à 82 % en poids d'un ou de plusieurs oxydes d'alkylène de 2 à 4 atomes C,
est mis en réaction en présence d'un catalyseur, l'oxyde d'alkylène du composant a5) contenant de l'oxyde de propylène.

8. Procédé de fabrication d'un polyol selon la revendication 7, selon lequel le composant a4) contient des monoesters d'acides gras et/ou des dérivés de monoesters d'acides gras, en particulier l'acide oléique, l'ester méthylique de l'acide oléique ou un dérivé de l'acide oléique.

9. Procédé de fabrication d'un polyol selon l'une quelconque des revendications 7 à 8, selon lequel l'oxyde d'alkylène du composant a5) est constitué d'oxyde de propylène.

10. Procédé de fabrication d'un polyol selon l'une quelconque des revendications 7 à 9, selon lequel l'indice OH du produit polyol est compris entre 400 et 700 mg KOH/g, de préférence entre 450 et 650 mg KOH/g, de manière particulièrement préférée entre 480 et 550 mg KOH/g.

11. Procédé de fabrication d'un polyol selon l'une quelconque des revendications 7 à 10, selon lequel la fonctionnalité du démarreur est comprise entre 2,5 et 8, de préférence entre 4 et 6, de manière particulièrement préférée entre 4,2 et 5,5.

12. Procédé de fabrication d'un polyol selon l'une quelconque des revendications 7 à 11, selon lequel le catalyseur est choisi dans le groupe des catalyseurs aminés, de préférence l'imidazole.

13. Procédé de fabrication d'un polyol selon l'une quelconque des revendications 7 à 12, selon lequel la température pendant la réaction se situe dans la plage allant de 80 à 140 °C et/ou la réaction dure de 30 minutes à 10 heures.

14. Utilisation d'un polyol selon l'une quelconque des revendications 1 à 6 ou d'un polyol pouvant être fabriqué par le procédé selon l'une quelconque des revendications 7 à 13 pour la fabrication de polyuréthanes.
